# EUROPÄISCHE PATENTSCHRIFT

(11) **EP 4 251 479 B1**
(45) Veröffentlichungstag und Bekanntmachung des Hinweises auf die Patenterteilung: **02.10.2024**
(21) Anmeldenummer: 21820509.4
(22) Anmeldetag: 25.11.2021
(51) Int. Cl.: B60T 1/10

(54) **MIT MUSKELKRAFT UND/ODER ELEKTRISCH ANTREIBBARES FAHRZEUG MIT RADSCHLUPFREGELUNG**
VEHICLE WITH MUSCLE OR ELECTRIC DRIVE AND WHEEL SLIP CONTROL
VÉHICULE À PROPULSION MUSCULAIRE SOIT ÉLECTRIQUE ET CONTRÔLE DE GLISSEMENT

(30) Priorität: 25.11.2020 DE 102020214764
(43) Veröffentlichungstag der Anmeldung: 04.10.2023
(73) Patentinhaber: Robert Bosch GmbH, 70442 Stuttgart (DE)
(72) Erfinder: KLEEMANN, Ralf, 71726 Benningen Am Neckar (DE)
(86) Internationale Anmeldenummer: PCT/EP2021/082994
(87) Internationale Veröffentlichungsnummer: WO 2022/112414

(56) Entgegenhaltungen:
- EP-A2- 1 396 802
- WO-A1-2020/017445
- JP-A- 2005 153 842
- US-A1- 2019 358 483

## Beschreibung

### Stand der Technik

Die vorliegende Erfindung betrifft ein mit Muskelkraft und/oder elektrisch antreibbares Fahrzeug, insbesondere ein Elektrofahrrad, wie beispielsweise ein Pedelec oder ein S-Pedelec oder E-Bike, mit einer Radschlupfregelung. Ferner betrifft die vorliegende Erfindung ein Verfahren zum Betreiben eines derartigen Fahrzeugs.

Mit Muskelkraft und/oder elektrisch antreibbare Fahrzeuge sind aus dem Stand der Technik in unterschiedlichen Ausgestaltungen bekannt. Derartige Fahrzeuge sind beispielsweise Pedelecs oder S-Pedelecs oder Elektrofahrräder. Hierbei bringt ein elektrischer Antrieb eine den Fahrer unterstützende Antriebskraft bzw. ein unterstützendes Antriebsmoment auf. Diese Unterstützung ist z.B. abhängig von einer Trittfrequenz des Fahrers, einer Geschwindigkeit des Fahrzeugs sowie üblicherweise von einem vom Fahrer über eine Steuereinheit ausgewählte Unterstützung, beispielsweise unterschiedliche Modi wie Eco, Tour, Sport, Speed usw. Der elektrische Antrieb kann hierbei im Bereich eines Kurbeltriebs des Fahrzeugs angeordnet sein oder auch als Radnabenantrieb ausgebildet sein. Weiterhin ist es bei Fahrrädern bekannt, dass elektrische Schaltgetriebe, welche einen elektrisch unterstützten Gangwechsel ausführen, vorzusehen. Im Betrieb derartiger Fahrzeuge kann es nun zu einer Situation kommen, in welcher ein angetriebenes Rad, insbesondere ein Hinterrad, einen unerwünschten Schlupf aufweist. Dies kann einerseits aufgrund einer Fehlbedienung durch einen Fahrer auftreten oder andererseits durch äußere Einflüsse, wie beispielsweise einen Reibwert eines Untergrunds, auf welchem das Fahrzeug steht. Insbesondere beim Anfahren am Berg oder winterlichen Umgebungseinflüssen kann ein derartiger Schlupf am angetriebenen Rad auftreten.

Aus der WO 2020/017445 A1 sind ferner eine Steuereinheit eines Motors eines elektrisch unterstützten Fahrzeugs bekannt. Die JP 2005 153842 A zeigt eine Steuervorrichtung einer Bremsanlage für Elektrofahrräder. Die Schrift EP 1 396 802 A2 offenbart ein Simulationssystem, sowie ein Verfahren, ein Fahrzeug betreffend, das Aspekte einer Steuerung des Fahrzeugs zeigt Die Schrift US 2019/358483 A1 offenbart unter anderem ein elektrisch unterstütztes, pedalgetriebenes Fahrzeug, das ausgebildet ist, ein Drehmomentabhängiges haptisches Feedback an ein Pedal auszugeben.

### Offenbarung der Erfindung

Das erfindungsgemäße mit Muskelkraft und/oder elektrisch antreibbares Fahrzeug mit den Merkmalen des Anspruchs 1 weist demgegenüber den Vorteil auf, dass ein zu hoher bzw. unerwünschter Schlupf an einem angetriebenen Rad verhindert werden kann. Dadurch wird eine Fahrsicherheit für einen Nutzer eines derartigen Fahrzeugs, welches beispielsweise ein Pedelec oder ein S-Pedelec oder ein Elektrofahrrad, insbesondere mit zwei oder drei Rädern, ist, signifikant erhöht. Dabei kann das Fahrzeug weiterhin einfach und kostengünstig aufgebaut sein. Dies wird erfindungsgemäß dadurch erreicht, dass das Fahrzeug einen mit Muskelkraft betreibbaren Antrieb, beispielsweise einen Kurbeltrieb, und einen elektrischen Antrieb aufweist. Ferner ist ein Energiespeicher vorgesehen, um den elektrischen Antrieb mit elektrischer Energie zu versorgen. Eine Steuereinheit ist eingerichtet, den elektrischen Antrieb in Abhängigkeit einer Trittfrequenz des Fahrers und/oder einer Fahrzeuggeschwindigkeit des Fahrzeugs und/oder einem durch den Fahrer aufgebrachten Drehmoment und/oder einem ausgewählten Unterstützungsmodus, z.B. klein, mittel, groß, zu steuern. Ferner umfasst das Fahrzeug eine erste Einrichtung zur Bestimmung einer Drehzahl eines durch den elektrischen Antrieb angetriebenen Rades und eine zweite Einrichtung zur Bestimmung einer Drehzahl an einem mitlaufenden, unangetriebenen Rad. Die Steuereinheit ist ferner eingerichtet, einen Vergleich der Drehzahlen des angetriebenen Rades und des unangetriebenen Rades durchzuführen und bei einer Feststellung einer Drehzahldifferenz zwischen dem angetriebenen und dem unangetriebenen Rad, welche einen vorgegebenen Schwellenwert überschreitet, eine Drehzahl des angetriebenen Rades zu reduzieren. Dadurch wird ein Schlupf am angetriebenen Rad reduziert oder vollständig verhindert, so dass ein sichereres Fahren des Fahrzeugs möglich ist. Insbesondere bei einem Anfahren am Berg oder bei einem Untergrund mit einem geringen Reibwert kann vermieden werden, dass das angetriebene Rad die Traktionsgrenze überschreitet und zu einer instabilen Fahrsituation des Fahrzeugs führt.

Die Unteransprüche zeigen bevorzugte Weiterbildungen der Erfindung.

Das angetriebene Rad ist vorzugsweise das Hinterrad des Fahrzeugs. Das unangetriebene Rad des Fahrzeugs ist vorzugsweise das Vorderrad des Fahrzeugs.

Die Einrichtung zur Bestimmung einer Drehzahl des angetriebenen Rades ist vorzugsweise ein erster Drehzahlsensor und die Einrichtung zur Bestimmung einer Drehzahl des unangetriebenen Rades ist vorzugsweise ein zweiter Drehzahlsensor. Die Verwendung von Drehzahlsensoren vereinfacht die Bestimmung der Drehzahlen des angetriebenen und unangetriebenen Rades und ermöglicht eine sichere Drehzahlerfassung. Darüber hinaus sind derartige Drehzahlsensoren sehr kostengünstig und kleinbauend am Fahrzeug anbringbar und häufig am Fahrzeug sowieso vorhanden, so dass diese mitgenutzt werden können.

Weiter bevorzugt ist die Steuereinheit eingerichtet, die Drehzahl des angetriebenen Rades durch eine Reduzierung einer Unterstützungsleistung des elektrischen Antriebs zu reduzieren. Dadurch kann auf schnelle Weise ein Schlupf des angetriebenen Rades reduziert oder ganz unterbunden werden.

Weiter bevorzugt ist die Steuereinheit ferner eingerichtet, durch einen Bremseingriff an einem der Räder, insbesondere am angetriebenen Rad, die Drehzahl des angetriebenen Rades zu reduzieren und dadurch einen am angetriebenen Rad auftretenden Schlupf zu reduzieren oder ganz zu vermeiden.

Weiter bevorzugt ist die Steuereinheit eingerichtet, die Drehzahl des angetriebenen Rades durch eine Änderung eines Ganges des Fahrzeugs, wenn dieses eine Gangschaltung aufweist, zu reduzieren.

Es sei angemerkt, dass vorzugsweise zur Reduzierung der Drehzahl des angetriebenen Rades mehrere Reduzierungsmöglichkeiten der Drehzahl gleichzeitig durchgeführt werden.

Weiter bevorzugt ist die Steuereinheit eingerichtet, die Reduzierung der Drehzahl in kurzen Intervallen, insbesondere Zehntelsekunden, auszuführen. Dadurch kann insbesondere eine zu große Drehzahlreduzierung am angetriebenen Rad vermieden werden.

Besonders bevorzugt ist die Steuereinheit dabei eingerichtet, die Reduzierung einer Unterstützungsleistung in kurzen Intervallen auszuführen und gleichzeitig einen Bremseingriff am angetriebenen Rad in kurzen Intervallen auszuführen.

Gemäß einer weiteren bevorzugten Ausgestaltung der vorliegenden Erfindung umfasst das Fahrzeug ferner eine Anzeigeeinrichtung, welche eingerichtet ist, einem Nutzer anzuzeigen, dass eine Drehzahl des angetriebenen Rades aktuell reduziert wird oder reduziert wurde. Hierdurch können einem Nutzer des Fahrzeugs Informationen gegeben werden, wie er eventuell in Zukunft einen Schlupf am angetriebenen Rad durch Anpassung seines Fahrverhaltens reduzieren oder ganz vermeiden kann.

Das Fahrzeug ist vorzugsweise ein elektrisch antreibbares Fahrrad, wobei das angetriebene Rad das Hinterrad des Fahrrads ist und/oder der elektrische Antrieb an einem Tretlager des Fahrzeugs angeordnet ist.

Weiter bevorzugt ist die Steuereinheit eingerichtet, eine Geschwindigkeit des Fahrzeugs mittels der Bestimmung der Drehzahlen am angetriebenen und/oder unangetriebenen Rad zu bestimmen oder alternativ oder zusätzlich eine Geschwindigkeit des Fahrzeugs mittels GPS-Informationen zu bestimmen und die Reduzierung der Drehzahl auch basierend auf der Geschwindigkeit des Fahrzeugs auszuführen. Durch Berücksichtigung der Geschwindigkeit des Fahrzeugs bei der Drehzahlreduzierung des angetriebenen Rades können insbesondere bei hohen Geschwindigkeiten Stürze vermieden werden.

Weiter bevorzugt ist alternativ zu einer Mittelmotoranordnung des elektrischen Antriebs ein elektrischer Antrieb auch als Nabenmotor vorgesehen, wobei mittels des Nabenmotors auch direkt Bremseingriffe am angetriebenen Rad möglich sind.

Ferner betrifft die vorliegende Erfindung ein Verfahren mit den Merkmalen des Anspruchs 10 zum Betreiben eines mit Muskelkraft und/oder elektrisch antreibbaren Fahrzeugs, insbesondere eines Elektrofahrrads, umfassend die Schritte:
- Ermitteln einer Drehzahl, insbesondere mittels eines ersten Drehzahlsensors, eines durch den elektrischen Antrieb angetriebenen Rades und einer Drehzahl, insbesondere mittels eines Drehmomentsensors, eines mitlaufenden, unangetriebenen Rades,
- Vergleichen der Drehzahlen in einer Vergleichseinrichtung und
- wenn eine Abweichung der Drehzahlen des angetriebenen Rades und des unangetriebenen Rades über einen vorbestimmten Schwellenwert liegt, Reduzieren der Drehzahl des angetriebenen Rades.

Dadurch werden die voranstehend erläuterten Vorteile erreicht.

Das Verfahren ist dabei weiter bevorzugt derart ausgestaltet, dass die Reduzierung der Drehzahl des angetriebenen Rades durch eine Reduzierung einer Unterstützungsleistung des elektrischen Antriebs und/oder einem Bremseingriff an einem der Räder, insbesondere an dem angetriebenen Rad, und/oder einer Änderung eines Ganges des Fahrzeugs, wenn dieses eine Gangschaltung hat, durchgeführt wird.

Das Verfahren führt dabei vorzugsweise die Reduzierung der Drehzahl in kurzen Intervallen, beispielsweise in Zehntelsekunden-Intervallen aus. Dadurch wird beispielsweise eine pulsierende Reduzierung der Unterstützungsleistung oder ein pulsierender Bremseingriff möglich.

Weiter bevorzugt wird die Ermittlung der Drehzahlen kontinuierlich durchgeführt, um möglichst genau einen am angetriebenen Rad auftretenden Schlupf zu erfassen.

### Kurze Beschreibung der Zeichnung

Nachfolgend wird unter Bezugnahme auf die begleitende Zeichnung ein bevorzugtes Ausführungsbeispiel der Erfindung im Detail beschrieben. In der Zeichnung ist:

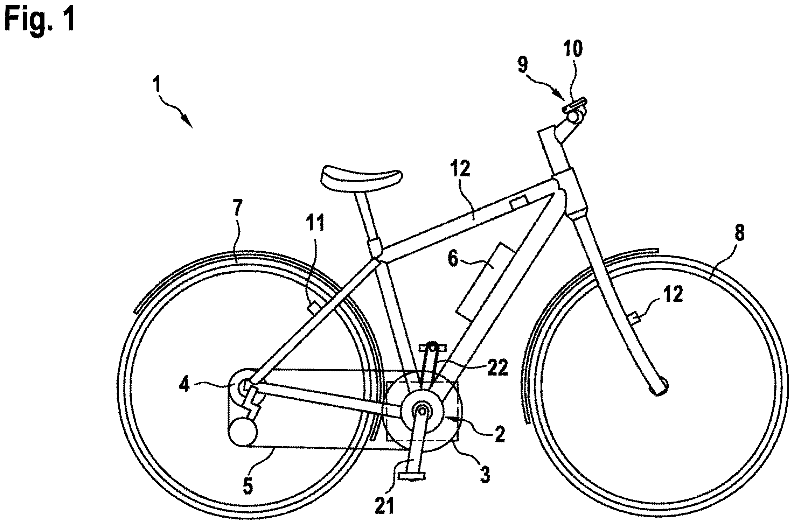

- Figur 1: eine schematische Ansicht eines Fahrzeugs mit einer Traktionsregelung gemäß einem bevorzugten Ausführungsbeispiel der Erfindung.

### Ausführungsform der Erfindung

Wie aus Figur 1 ersichtlich ist, ist das Fahrzeug 1 ein elektrisch angetriebenes Fahrrad.

Das Fahrrad umfasst dabei einen elektrischen Antrieb 3 und einen Kurbeltrieb 2 mit zwei Kurbeln 21, 22. Ein Nutzer des Fahrrads kann dabei über den Kurbeltrieb 2 mittels Muskelkraft das Fahrrad antreiben.

Der elektrische Antrieb 3 ist im Bereich des Kurbeltriebs 2 angeordnet, so dass das Elektrofahrrad dieses Ausführungsbeispiels ein Mittelmotorfahrrad ist.

Das Elektrofahrrad umfasst ferner eine elektrisch schaltbare Gangschaltung 4, welche schematisch in Figur 1 am Hinterrad 7 dargestellt ist. Eine Kette ist mit dem Bezugszeichen 5 versehen.

Weiterhin ist ein Energiespeicher 6 an einem Rahmen des Fahrzeugs 1 angeordnet, welcher den elektrischen Antrieb 3 mit elektrischer Energie versorgt.

Somit ist bei diesem Ausführungsbeispiel das Hinterrad das angetriebene Rad 7 und ein Vorderrad das mitlaufende, unangetriebene Rad 8.

Das Fahrzeug 1 umfasst ferner eine Steuereinheit 10, welche in diesem Ausführungsbeispiel am Lenker des Elektrofahrrads angeordnet ist. Die Steuereinheit 10 ist eingerichtet, den elektrischen Antrieb 3 anzutreiben. Eine Höhe einer Unterstützungsleistung durch den elektrischen Antrieb 3 hängt dabei von verschiedenen Faktoren ab, beispielsweise einem Wunsch des Fahrers nach Unterstützung (gering, mittel, hoch oder dergleichen), einer Fahrzeuggeschwindigkeit des Elektrofahrrads, z.B. Unterstützung nur bis 25 km/h, und/oder einer Trittfrequenz des Nutzers und/oder eines aufgebrachten Drehmoments des Nutzers am Kurbeltrieb 2.

Zur Ermittlung der Drehzahl des Hinterrads ist ein erster Drehzahlsensor 11 am Hinterrad angeordnet. Ein zweiter Drehzahlsensor 12 ist am Vorderrad angeordnet.

Der erste und zweite Drehzahlsensor 11, 12 sind vorzugsweise gleich aufgebaut und können direkt eine Drehzahl des Vorderrads und des Hinterrads erfassen. Die Drehzahlen werden vorzugsweise kabellos an die Steuereinheit 10 übermittelt. Die Steuereinheit 10 umfasst eine Vergleichseinrichtung, welche eingerichtet ist, einen Vergleich zwischen den Drehzahlen des angetriebenen Rades 7 (Hinterrad) und des unangetriebenen Rades 8 (Vorderrad) zu bestimmen.

Sobald die Steuereinheit 10 mittels der Vergleichseinrichtung feststellt, dass die Drehzahl zwischen dem angetriebenen Rad 7 und dem unangetriebenen Rad 8 einen vorbestimmten Schwellenwert übersteigt, wird daraus geschlossen, dass ein Schlupf am angetriebenen Rad 7 vorliegt. Ein zu großer Schlupf kann zu einer gefährlichen Fahrsituation für den Nutzer des Fahrrads führen.

Daher ist die Steuereinheit 10 eingerichtet, bei Feststellung einer vorbestimmten Drehzahldifferenz zwischen dem angetriebenen Rad 7 und dem unangetriebenen Rad 8 eine Drehzahl des angetriebenen Rades 7 zu reduzieren. Dadurch wird direkt ein Schlupf des angetriebenen Rades 7 reduziert. Somit kann eine gefährliche Fahrsituation durch die Steuereinheit 10 vermieden werden.

Die Steuereinheit 10 umfasst ferner bevorzugt eine Anzeigeeinrichtung 9. Ein derartiger Eingriff der Steuereinheit 10 in eine Drehzahl des angetriebenen Rades 7 kann dabei an der Anzeigeeinrichtung 9 direkt oder mit Zeitverzögerung angezeigt werden. Ein Nutzer kann dadurch an der Anzeigeeinrichtung 9 erkennen, dass ein derartiger Eingriff zur Reduzierung der Drehzahl des angetriebenen Rades 7 stattgefundenen hat und gegebenenfalls daraus sein Fahrverhalten, beispielsweise bei einem Anfahren an einem Berg oder dergleichen, anpassen, so dass ein derartiger Schlupf möglichst nicht mehr auftritt.

Somit kann dadurch das erfindungsgemäße Fahrzeug 1 und das Verfahren zum Betreiben des mit Muskelkraft und/oder elektrisch antreibbaren Fahrzeugs 1 eine signifikante Steigerung einer Sicherheit bei einem geregelten bzw. an die Fahrsituation angepassten Schlupf des angetriebenen Rades 7 ermöglicht werden. Hierbei ist die Steuereinheit 10 eingerichtet, entweder nur eine einzige Strategie der Reduzierung der Drehzahl des angetriebenen Rades durchzuführen, beispielsweise nur eine Reduzierung einer Unterstützungsleistung des elektrischen Antriebs 3 durchzuführen oder gleichzeitig mehrere Strategien zur Drehzahlreduzierung, z.B. zusätzlich die Durchführung eines Bremseingriffs am angetrieben und/oder unangetriebenen Rad und/oder einer Änderung eines Ganges einer Gangschaltung 4. In den meisten Fällen ist ein kurzfristiges Aussetzen einer Unterstützungsleistung des elektrischen Antriebs 3 ausreichend, um die notwendige Traktion des angetriebenen Rades 7 wiederherzustellen.

Hierbei ist es ferner möglich, dass das Elektrofahrrad zusätzlich oder alternativ GPS-Informationen für eine Geschwindigkeitsbestimmung des Elektrofahrrads verwendet und diese Information auch bei der Drehzahlreduzierung des angetriebenen Rades 7 verwendet.

Das Elektrofahrrad kann dadurch insbesondere bei Bergauf-Fahrten auf losem und/oder nassem Untergrund eine bessere Traktion aufweisen. Hierbei ist einerseits ein Anfahren aus dem Stillstand möglich und andererseits kann auch ein seitliches Wegrutschen des angetriebenen Rades, insbesondere des Hinterrades 7, durch übermäßigen Schlupf verhindert werden. Somit kann auch eine Sturzgefahr des Nutzers reduziert werden. Auch bei einem Untergrund mit geringem oder reduziertem Reibwert, beispielsweise durch Eis oder Schnee oder Glätte oder dergleichen, wird das angetriebene Rad am seitlichen Wegrutschen gehindert.

Ferner sei angemerkt, dass der elektrische Antrieb 3 auch als Nabenantrieb ausgebildet sein kann, so dass der Nabenantrieb beispielsweise derart angesteuert werden kann, dass sowohl eine Reduzierung der Unterstützungsleistung vorgegeben wird, als auch eine Umkehr des Antriebsmoments des Nabenantriebs ermöglicht wird, was einen aktiven Bremseingriff durch den Nabenantrieb ermöglicht.

## Patentansprüche

1. Mit Muskelkraft oder elektrisch antreibbares Fahrzeug, insbesondere Elektrofahrrad, umfassend:
- einen mit Muskelkraft betreibbaren Antrieb (2),
- einen elektrischen Antrieb (3),
- einen Energiespeicher (6) zur Versorgung des elektrischen Antriebs (3) mit elektrischer Energie,
- eine Steuereinheit (10), die eingerichtet ist, den elektrischen Antrieb (3) in Abhängigkeit einer Trittfrequenz und/oder einer Fahrzeuggeschwindigkeit und/oder eines durch einen Fahrer aufgebrachten Drehmoments und/oder eines durch einen Fahrer ausgewählten Unterstützungsmodus zu steuern,
- eine erste Einrichtung (11) zur Bestimmung einer Drehzahl an einem durch den elektrischen Antrieb (3) angetriebenen Rad (7), und
- eine zweite Einrichtung (12) zur Bestimmung einer Drehzahl an einem mitlaufenden, unangetriebenen Rad (8) des Fahrzeugs (1),
- **dadurch gekennzeichnet, dass** die Steuereinheit (10) ferner eingerichtet ist, einen Vergleich der Drehzahlen des angetriebenen Rades (7) und des unangetriebenen Rades (8) durchzuführen und bei Feststellung einer Drehzahldifferenz zwischen dem angetriebenen Rad (7) und dem unangetriebenen Rad (8), welche einen vorgegebenen Schwellenwert überschreitet, eine Drehzahl des angetriebenen Rades (7) zu reduzieren.

2. Fahrzeug nach Anspruch 1, wobei die Steuereinheit (10) eingerichtet ist, die Drehzahl des angetriebenen Rades (7) durch eine Reduzierung einer Unterstützungsleistung des elektrischen Antriebs (3) zu realisieren.

3. Fahrzeug nach einem der vorhergehenden Ansprüche, wobei die Steuereinheit (10) eingerichtet ist, die Drehzahl des angetriebenen Rades (7) durch einen Bremseingriff an wenigstens einem der Räder, insbesondere am angetriebenen Rad (7), zu reduzieren.

4. Fahrzeug nach einem der vorhergehenden Ansprüche, ferner umfassend eine Gangschaltung (4), wobei die Steuereinheit (10) eingerichtet ist, die Drehzahl des angetriebenen Rades (7) durch eine Änderung eines Ganges des Fahrzeugs (1) zu reduzieren.

5. Fahrzeug nach einem der vorhergehenden Ansprüche, wobei die Steuereinheit (10) eingerichtet ist, die Reduzierung der Drehzahl des angetriebenen Rades (7) in vorbestimmten Intervallen, insbesondere Zehntelsekunden, auszuführen.

6. Fahrzeug nach Anspruch 5, wobei die Reduzierung einer Unterstützungsleistung durch den elektrischen Antrieb (3) in mehreren Intervallen erfolgt und/oder wobei die Reduzierung der Drehzahl durch einen Bremseingriff in mehreren Intervallen erfolgt.

7. Fahrzeug nach einem der vorhergehenden Ansprüche, ferner umfassend eine Anzeigeeinrichtung (9), welche eingerichtet ist, einem Fahrer anzuzeigen, dass eine Drehzahl des angetriebenen Rades (7) reduziert wird oder reduziert wurde.

8. Fahrzeug nach einem der vorhergehenden Ansprüche, wobei das angetriebene Rad (7) das Hinterrad ist und/oder wobei der elektrische Antrieb (3) an einem Kurbeltrieb (2) des Fahrzeugs (1) angeordnet ist.

9. Fahrzeug nach einem der vorhergehenden Ansprüche, wobei die Steuereinheit (10) eingerichtet ist, bei der Reduzierung der Drehzahl des angetriebenen Rades (7) auch eine Geschwindigkeit des Fahrzeugs zu berücksichtigen.

10. Verfahren zum Betreiben eines mit Muskelkraft und/oder elektrisch antreibbaren Fahrzeugs, insbesondere Elektrofahrrad, umfassend die Schritte:
- Ermitteln einer Drehzahl eines durch den elektrischen Antrieb (3) angetriebenen Rades (7) und eines mitlaufenden, unangetriebenen Rades (8),
- Vergleichen der Drehzahlen des angetriebenen Rades (7) und des unangetriebenen Rades (8) und **dadurch gekennzeichnet, dass**
- wenn eine Abweichung der Drehzahlen des angetriebenen und unangetriebenen Rades (7, 8) über einen vorbestimmten Schwellenwert liegt, Reduzieren der Drehzahl des angetriebenen Rades (7).

11. Verfahren nach Anspruch 10, wobei die Reduzierung der Drehzahl des angetriebenen Rades (7) durch eine Reduzierung einer Unterstützungsleistung des elektrischen Antriebs (3) erfolgt und/oder durch einen Bremseingriff an einem der Räder, insbesondere am angetriebenen Rad (7), erfolgt und/oder durch eine Änderung eines Ganges einer Gangschaltung (4) des Fahrzeugs (1), wenn das Fahrzeug (1) eine Gangschaltung (4) aufweist, erfolgt.

12. Verfahren nach Anspruch 10 oder 11, wobei die Reduzierung der Drehzahl des angetriebenen Rades (7) in mehreren Intervallen erfolgt.

## Claims

1. Vehicle drivable with muscle power or electrically, in particular electric bicycle, comprising:
- a drive (2) operable with muscle power,
- an electric drive (3),
- an energy store (6) for supplying the electric drive (3) with electrical energy,
- a control unit (10) which is designed to control the electric drive (3) depending on a pedalling frequency and/or a vehicle speed and/or a torque applied by a cyclist and/or an assisting mode selected by a cyclist,
- a first device (11) for determining a rotational speed at a wheel (7) driven by the electric drive (3), and
- a second device (12) for determining a rotational speed at a revolving, non-driven wheel (8) of the vehicle (1),
- **characterized in that**
the control unit (10) is furthermore designed to carry out a comparison of the rotational speeds of the driven wheel (7) and of the non-driven wheel (8) and, when a rotational speed difference between the driven wheel (7) and the non-driven wheel (8) that exceeds a predefined threshold value is established, to reduce a rotational speed of the driven wheel (7).

2. Vehicle according to Claim 1, wherein the control unit (10) is designed to realize the rotational speed of the driven wheel (7) by reducing an assisting power of the electric drive (3).

3. Vehicle according to either of the preceding claims, wherein the control unit (10) is designed to reduce the rotational speed of the driven wheel (7) by a braking intervention at at least one of the wheels, in particular the driven wheel (7).

4. Vehicle according to one of the preceding claims, furthermore comprising a transmission (4), wherein the control unit (10) is designed to reduce the rotational speed of the driven wheel (7) by changing a gear of the vehicle (1).

5. Vehicle according to one of the preceding claims, wherein the control unit (10) is designed to implement the reduction in the rotational speed of the driven wheel (7) at predetermined intervals, in particular tenths of a second.

6. Vehicle according to Claim 5, wherein the reduction in an assisting power by the electric drive (3) takes place in a plurality of intervals, and/or wherein the reduction in the rotational speed by a braking intervention takes place in a plurality of intervals.

7. Vehicle according to one of the preceding claims, furthermore comprising a display device (9) which is designed to display to a cyclist that a rotational speed of the driven wheel (7) is reduced or has been reduced.

8. Vehicle according to one of the preceding claims, wherein the driven wheel (7) is the rear wheel, and/or wherein the electric drive (3) is arranged on a crank drive (2) of the vehicle (1).

9. Vehicle according to one of the preceding claims, wherein the control unit (10) is designed to also take into consideration a speed of the vehicle in the reduction in the rotational speed of the driven wheel (7).

10. Method for operating a vehicle drivable with muscle power and/or electrically, in particular electric bicycle, comprising the steps of:
- determining a rotational speed of a wheel (7) driven by the electric drive (3) and of a revolving, non-driven wheel (8),
- comparing the rotational speeds of the driven wheel (7) and of the non-driven wheel (8), and is **characterized in that**
- if a difference in the rotational speeds of the driven and non-driven wheels (7, 8) lies above a predetermined threshold value, reducing the rotational speed of the driven wheel (7).

11. Method according to Claim 10, wherein the reduction in the rotational speed of the driven wheel (7) takes place by reducing an assisting power of the electric drive (3) and/or by a braking intervention at one of the wheels, in particular at the driven wheel (7), and/or by a change in a gear of a transmission (4) of the vehicle (1), if the vehicle (1) has a transmission (4).

12. Method according to Claim 10 or 11, wherein the reduction in the rotational speed of the driven wheel (7) takes place in a plurality of intervals.

## Revendications

1. Véhicule à propulsion musculaire ou électrique, notamment vélo électrique, comprenant :
- un entraînement pouvant être actionné par la force musculaire (2),
- un entraînement électrique (3),
- un accumulateur d'énergie (6) destiné à alimenter l' entraînement électrique (3) en énergie électrique,
- une unité de commande (10), qui est conçue pour commander l'entraînement électrique (3) en fonction d'une fréquence de pédalage et/ou d'une vitesse du véhicule et/ou d'un couple appliqué par un conducteur et/ou d'un mode d'assistance sélectionné par un conducteur,
- un premier dispositif (11) destiné à déterminer une vitesse de rotation au niveau d'une roue (7) entraînée par l'entraînement électrique (3), et
- un deuxième dispositif (12) destiné à déterminer une vitesse de rotation au niveau d'une roue non entraînée (8) du véhicule (1), laquelle suit la rotation,
- **caractérisé en ce que**
l'unité de commande (10) est en outre conçue pour effectuer une comparaison des vitesses de rotation de la roue entraînée (7) et de la roue non entraînée (8) et, en cas de constatation d'une différence de vitesses de rotation entre la roue entraînée (7) et la roue non entraînée (8) qui dépasse une valeur de seuil prédéfinie, pour réduire une vitesse de rotation de la roue entraînée (7).

2. Véhicule selon la revendication 1, l'unité de commande (10) étant conçue pour réaliser la vitesse de rotation de la roue entraînée (7) par une réduction d'une puissance d'assistance de l'entraînement électrique (3).

3. Véhicule selon l'une des revendications précédentes, l'unité de commande (10) étant conçue pour réduire la vitesse de rotation de la roue entraînée (7) par une intervention de freinage sur au moins l'une des roues, notamment sur la roue entraînée (7).

4. Véhicule selon l'une des revendications précédentes, comprenant en outre un système de changement de rapport (4), l'unité de commande (10) étant conçue pour réduire la vitesse de rotation de la roue entraînée (7) en changeant un rapport de vitesse du véhicule (1).

5. Véhicule selon l'une des revendications précédentes, l'unité de commande (10) étant conçue pour effectuer la réduction de la vitesse de rotation de la roue entraînée (7) à des intervalles prédéterminés, notamment des dixièmes de seconde.

6. Véhicule selon la revendication 5, la réduction d'une puissance d'assistance par l'entraînement électrique (3) s'effectuant en plusieurs intervalles et/ou la réduction de la vitesse de rotation par une intervention de freinage s'effectuant en plusieurs intervalles.

7. Véhicule selon l'une des revendications précédentes, comprenant en outre un dispositif d'affichage (9), lequel est conçu pour indiquer à un conducteur qu'une vitesse de rotation de la roue entraînée (7) est réduite ou a été réduite.

8. Véhicule selon l'une des revendications précédentes, la roue entraînée (7) étant la roue arrière et/ou l'entraînement électrique (3) étant disposé sur un pédalier (2) du véhicule (1).

9. Véhicule selon l'une des revendications précédentes, l'unité de commande (10) étant conçue pour tenir également compte de la vitesse du véhicule lors de la réduction de la vitesse de rotation de la roue entraînée (7).

10. Procédé pour faire fonctionner un véhicule à propulsion musculaire et/ou électrique, notamment un vélo électrique, comprenant les étapes suivantes :
- détermination d'une vitesse de rotation d'une roue entraînée (7) par l'entraînement électrique (3) et d'une roue non entraînée (8) qui suit la rotation,
- comparaison des vitesses de rotation de la roue entraînée (7) et de la roue non entraînée (8), et **caractérisé en ce que**
- lorsqu'un écart entre les vitesses de rotation de la roue entraînée et de la roue non entraînée (7, 8) est supérieur à une valeur de seuil prédéterminée, réduction de la vitesse de rotation de la roue entraînée (7).

11. Procédé selon la revendication 10, la réduction de la vitesse de rotation de la roue entraînée (7) s'effectuant par une réduction d'une puissance d'assistance de l'entraînement électrique (3) et/ou s'effectuant par une intervention de freinage sur l'une des roues, notamment sur la roue entraînée (7), et/ou effectuant par un changement de rapport d'un système de changement de rapport (4) du véhicule (1) lorsque le véhicule (1) possède un système de changement de rapport (4).

12. Procédé selon la revendication 10 ou 11, la réduction de la vitesse de rotation de la roue entraînée (7) s'effectuant en plusieurs intervalles.
